# EUROPEAN PATENT APPLICATION

(11) **EP 0 869 216 A1**
(43) Date of publication of application: **07.10.1998**
(21) Application number: 98302541.2
(22) Date of filing: 01.04.1998
(51) Int. Cl.: D06M 16/00, D06M 13/02, A01N 25/34, A47L 13/16, C08J 9/40

(54) **Flexible hydrophilic articles having a durable antimicrobial effect**

(30) Priority: 02.04.1997 GB 9706714; 02.04.1997 GB 9706713
(71) Applicant: Reckitt & Colman Inc., Wayne, New Jersey 07474 (US)
(72) Inventor: Feuer, William Ronald, Nyack, New York 10960 (US); McCue, Karen Ann, Tenafly, New Jersey 07670 (US); Kiefer, Beverly Ann, Montvale, New Jersey 07645 (US)
(74) Representative: Dale, Martin Nicholas

(57) **Abstract**

Flexible wiping articles in particular sponges, as well as woven or non-woven wipes, and the like feature a long term antimicrobial benefit even subsequent to continued use. According to one aspect of the invention, the articles comprise a biocidal composition having a low aqueous solubility. According to a second aspect of the invention, the articles comprise a carrier of low aqueous solubility having dispersed within a biocidal composition.

Methods for preparing the articles, and processes for their use are also disclosed.

## Description

The present invention relates to flexible wiping articles in particular sponges, as well as woven wipes or non-woven wipes, and the like. More specifically, the present invention relates to wiping articles having a residual antimicrobial effect.

Wiping articles are commonly used in the cleaning of hard surfaces including but not limited to, glass, dishes, porcelain, lavatory fixtures, kitchen fixtures and appliances, sinks, and the like are well known. These take a variety of forms, including woven and non-woven wipes formed of fibrous (natural or synthetic) materials and in particular hydrophilic sponges. These sponges may be formed from any a variety of materials including foamed polymers as well as from cellulose. These are per se well known to the art and are very commonly encountered in food service, medical, and other environments.

A consequence of the use of such materials, particularly when used in any type of a cleaning operation is that after the sponge or wiping article has been used, it is frequently set aside in a moist state. In its moist state, it provides a place for the breeding of various bacteria, viruses, fungi, etc. Thus, these sponges and wiping articles are not sanitary.

Known to the art a variety of wiping articles and sponges which have various degrees of antimicrobial benefit provided therein. These are provided by different processes or by the use of particular constituents which are used in conjunction with such sponges or wiping articles. These include, for example those described in the following patents: US 4666621, US 4737405, US 4740398, US 5091102, US 4692374, US 5156843, US 3227614, US 3283357, US 4847089, US 5541233, US 5441742, US 4339550, US 5173535 and US 4704757. Also, it is also known to include a minor amount of a biocide, such as a preservative composition into a sponge prior to packaging. This ensures that as the sponge is on the shelf and prior to its use it is unlikely to grow mould, fungi, or to contain bacteria or viruses prior to its use on the opening of the package by the ultimate product consumer. It is also known to the art that many types of sponges, especially cellulose sponges, are packaged and sold in a substantially dehydrated form wherein it is very unlikely that a mould, fungus, virus or bacteria will find beneficial conditions for growth.

While these sponges and wiping articles described above are known to the prior art do provide various benefits, they are not without shortcomings. One particular shortcoming which is of increasing concern to the consumer is the long-term, (e.g., at least 48 hours or at least 8 uses or the sponge) antimicrobial efficacy of the sponge. Frequently, in sponges which are treated with small amounts of biocides, these biocides are generally washed out after even a few uses of the sponge under normal cleaning conditions. Thus, although the said sponge has been treated during its packaging stage, shortly after its use, it no longer retains any appreciable antimicrobial efficacy. Certain other sponges and wiping articles have been proposed in the art which do provide an effective antimicrobial benefit which may be of somewhat longer duration; however the methods for producing such sponges and wiping articles are frequently complicated and require additional and/or complex steps in the production of the sponge or wiping article.

Accordingly, there is a real and continuing need in the art for sponges and other wiping articles which have a useful antimicrobial benefit during a period of normal use in cleaning, wiping, and other operations. These objects are provided by the articles, processes, and methods of the present invention.

The present invention provides a sponge, or a woven wiping article or a non-woven wiping article, which has a residual antimicrobial effect, as well a processes for producing such a sponge, woven wiping article or non-woven wiping article, as well as methods for using these articles.

Accordingly, a first aspect of the invention provides a sponge or a woven or wiping article or non-woven wiping article, preferably a sponge which has a residual antimicrobial effect wherein said article is impregnated with biocidally effective amount of a biocidal composition preferably which is effective against gram positive, gram negative but more preferably is effective against both gram positive and gram negative bacteria.

The biocidal composition preferably has a low aqueous solubility by which we mean has preferably a solubility of not more than 7.5%wt., more preferably not more than 5.5%wt., still more preferably not more than 4%wt., especially not more than 2%wt., more especially not more than 1.5%wt., and most especially not more than 1%wt. at 25°C in water.

Preferably the biocidal composition is present in the sponge, woven or non-woven wiping article in an amount of at least 0.005 grams, more preferably from 0.005 grams to about 1 gram, most preferably 0.05 to 0.20 grams of the biocidal composition are present per gram of wiping article, on a dry weight basis, especially where the wiping article is a cellulose sponge

According to a second aspect of the invention there is provided a sponge or a woven article or a non-woven wiping article, which contains therein a carrier of low aqueous solubility having dispersed therein a biocidal composition (such as a preservative composition).

According to a third aspect of the invention, there is provided a process for providing residual antimicrobial benefit to a sponge or a woven wiping article or a non-woven wiping article which comprises the process steps of:
i) providing a low aqueous soluble biocidal composition in an appropriate fluid carrier in which the biocidal composition is miscible, but is preferably soluble;
ii) impregnating the said wiping article to provide an effective dosage of the biocidal composition to the same; and,
iii) subsequently removing at least a portion, preferably substantially all of the carrier composition.

According to a fourth aspect of the invention there is provided a process for providing residual antimicrobial benefit to a sponge or a woven wiping article or a non-woven wiping article which comprises the process steps of:
i) providing a dispersion of a biocidal composition in carrier having low aqueous solubility;
ii) impregnating the said flexible hydrophilic article with the carrier containing the biocidal composition to provide a biocidally effective dosage of the biocidal composition to the said article.

Further aspects of the invention include methods for the use of the sponge or a woven wiping article or non-woven wiping article according to the first, second, third or fourth aspects of the invention as described above.

The wiping articles useful in the present invention include those such as are commonly encountered and these specifically include sponges, preferably hydrophilic sponges, as well as woven wiping articles and non-woven wiping articles. With respect to sponges, these may be any variety which are presently known and many which are widely commercially available including those produced from foamed rubbers (naturally occurring or synthetically produced), foamed polymers such as polyurethane, polypropylene, polyethylene, polyester, polyethers, and of regenerated cellulose. Sponges which are particularly useful in the compositions of the present invention are those which are formed from cellulose and are also interchangeably referred as viscose sponges. These are known to the art and are produced from comminuted and ground wood pulp which are then regenerated to form a porous hydrophilic article.

With regard to such sponges, it is to be understood that these may be of a single material and of a single layer, or they may be produced as a composite material. What is to be understood as composite material is that two or more differing materials may be combined to form a sponge where at least one layer is hydrophilic, especially a first layer of a hydrophilic material which is glued, sewn, or otherwise connected to a second layer of a differing material. Such differing materials include those which are commonly known, including those formed of woven and/or non-woven fabric materials which are often intended to provide an abrasive surface which are not particularly deleterious to soft surfaces (Teflon®, Corian®, fiberglass, etc.). Also, such composite sponges also include those which include one or two differing hydrophilic sponge materials which may be sewn together. In this sponge construction, sponges of two different materials are sewn together at peripheral edges, and further optionally on at least one face of the sponge is further included a woven textile material. Such an exemplary sponge is available as Chore Boy® Long-Last sponges (Reckitt & Colman Inc.).

With regard to woven and/or non-woven wipes, these include a variety of materials which may be formed into wipes by the knitting or weaving of fibrous materials, particularly polymeric fibrous materials including, but not limited to, polypropylene, polyethylene, polyester, polyamide, regenerated cellulosic fibers as well as those based on naturally occurring materials such as cellulose fibers particularly those which are based on wood pulp fibers as provided by either chemical and/or mechanical pulp fibers. Such fibers may alternately be formed into a non-woven web by a variety of known art techniques including inter alia, air laying and wet laying of the naturally occurring (cellulose) and/or synthetic (polymeric) fibers into a web. Further useful are non-woven materials wherein a non-woven mat of such fibrous materials are produced by providing an intermediate adhesive between the individual fibers, or by cross linking of the fibers themselves.

Further useful woven and/or non-woven wipes include those which are produced from cellulosic fibers which may be formed into a web by a variety of known art techniques, including air laying and wet laying of the fibers. To such woven and/or non-woven fibers may also be added amounts of abrasive materials including one or more mineral salts including, but not limited to, metal oxides especially aluminium oxide.

It is to be understood that with regard to the description of the wiping articles, the sponges, woven and non-woven wipes described above are provided by way of illustration not by way of limitation and other materials other than described herein may also enjoy the benefits of the present invention.

With regard to the biocide composition useful according to the first and third aspects of the invention, the inventors have surprisingly found that the use of a low-water soluble biocides (also referred to as biocidal compositions) may be effectively used to impregnate the wiping article, and at the same time, provide a long-term sanitising benefit to the sponge which is effective against gram positive, or gram negative, but most preferably against both gram positive and gram negative bacteria.

Such low-water soluble biocidal compositions are per se known to the art and may be available from a variety of commercial sources. These are also sometimes referred to as preservative compositions. Useful compositions include those which exhibit a solubility in water at 25°C of not more than about 7.5% by weight, more preferably are those which exhibit solubility of less than about 5.5% by weight, and most preferably are those compositions which exhibit a solubility of water at 25°C of not more than about 4% by weight, but most desirably are those having aqueous solubilities of less than about 2% by weight and even lesser aqueous solubilities, e.g., 1.5%wt., and 1.0%wt. By way of non-limiting examples, these include the following commercially available preparations: Proxel® GXL (19.3%wt. actives) (Zeneca Biocides, Wilmington DE) which is described to be a preparation which contains 1,2-benzisothiazoline-3-one as an active constituent; Dantogard® Plus (Lonza Inc., Fairlawn NJ) which is described to be a preparation which contains DMDM Hydantoin and iodo propynyl butyl carbamate as active constituents; Busan® 1104 (93%wt. actives) (Buckman Co.) which is described to have an aqueous solubility in water of up to about 4%wt. at 25°C and to be a preparation which contains dimethylhydroxymethylpyrazole as an active constituent; Germaben® II (44%wt. actives) (Sutton Co., Madison NJ) which is described to be a preparation which contains as active constituents a mixture based on diazolidinyl urea, methylparaben, propylparaben & propylene glycol; Troysan® 142 (95%wt. actives) (Troy Chemical Co.) which is described to have an aqueous solubility in water of up to about 0.12%wt. at about 30°C and to be a preparation which contains 3,5-dimethyltetrahydro 1,3,5-2H-thiadiazine-2-thione as an active constituent; Biochek® 410 (25%wt. actives) (Calgon Corp., Pittsburgh, PA) described to be based on 1,2-dibromo-2,4-dicyanobutane and 1,2-benzisothiazolin-3-one and to have an aqueous solubility of 0.22%wt. in water at 25°C; as well as compounds which are based on metals or metal salts including preparations such as Bactekiller® (Kanebo Chem.Co.) which is described to be a preparation which contains a mixture of silver, zinc and copper metals or metal salts.

As noted previously those which exhibit the relatively low aqueous solubility (eg 7.5 % or less) at 25°C particularly in the weight ranges and preferred weight ranges are to be preferred for use in the first and third aspects of the invention. Others, materials although not particularly recited here may be used, and mixtures of two or more biocidal compositions may be used.

Preferred biocidal compositions useful in the first and third aspects of the invention include those based on one or more of the following materials: 1,2-benzisothiazoline-3-one, DMDM Hydantoin, and iodo propynyl butyl carbamate, dimethylhydroxymethylpyrazole, diazolidinyl urea, methylparaben, propylparaben, 3,5-dimethyltetrahydro 1,3,5-2H-thiadiazine-2-thione, 1,2-dibromo-2,4-dicyanobutane, 1,2-benzisothiazolin-3-one, as well as compounds which are based on metals or metal salts especially mixtures of silver, zinc and copper metals or metal salts. An exemplary and particularly preferred biocidal composition material is Tektamer® 38 (98%wt. actives) (Calgon Corporation, Pittsburgh, PA) which is cited as exhibiting an aqueous solubility of about 0.22%wt. in water at 25°C; it is believed that the active constituent in this biocidal composition is 1,2-dibromo-2,4-dicyanobutane. This low aqueous soluble biocidal composition also desirably features a low toxicity profile and thus its use in the household does not expect it to be particularly deleterious to the occupants. This low aqueous soluble biocidal composition also desirably exhibits good compatibility with a broad range of surfactant compositions especially anionic and nonionic surfactants which are optionally included in the articles according to the invention. This low aqueous soluble biocidal composition is incorporated in the sponge, woven or non-woven wipe in the amounts indicated above.

The wiping articles according to the invention, and especially hydrophilic sponges, i.e., cellulose sponges and foamed polymer sponges, which are the preferred embodiments of the first and third aspects of the invention may be prepared by any of a number of conventional techniques including but not limited to: spraying the biocidal composition onto or into a wiping article, dipping or soaking the wiping article into a liquid carrier containing the biocidal composition, or even supplying the biocidal composition in a process step wherein the wiping articles, particularly sponges, are formed. An exemplary process is one according to the following process. A quantity of the low aqueous soluble biocidal composition is dissolved in a suitable solvent to which the biocidal composition exhibits a higher affinity (than to water), organic solvents such as alcohols, glycols, glycol ethers, and the like, which may also include minor amounts of water. The amount of the solvent is not critical, but it is beneficial to use amounts which are sufficient to dissolve or mix with the biocidal composition, but at the same time is an amount which is not excessive so to require that an extensive drying or evaporation interval in order to remove the solvent from the impregnated solvent or wipe. Mixtures of such organic solvents or organic/aqueous solvent compositions, may also be used. Next, a quantity of the low aqueous soluble biocidal composition is dispersed, or dissolved therein. Next, the wiping article intended to be impregnated, especially a sponge, is then immersed within the solvent and biocidal composition and allowed to fully entrain the composition. Thereafter, the wiping article is withdrawn, the solvent is then substantially driven off (which may require mild heating, drawing of a vacuum, or merely permitting it to sit in the ambient environment). Depending upon the volatility of the organic solvent, such may evaporate readily into the air. Optionally, although not always desirably, the wiping article may be first compressed such as through pinch rollers, wrung, or squeezed in order to dry off as much as possible of the organic solvent containing the preservative composition. However, as this concomitantly causes a net loss of the organic solvent with the biocidal composition such is not always desirable.

With respect to the first and third inventive aspects, while the efficacy of the biocidal composition selected for use may vary, and that a higher or lower dosing of biocidal composition per unit of the wiping article may be required, generally good results have been achieved when at least about 0.005 grams of the biocidal composition based on the weight of the actives of the biocidal composition are present per gram of wiping article based on the dry weight of the wiping article, viz., in a substantially dehydrated state. Preferably from about 0.005 grams to about 1 gram, more preferably from 0.05 grams to about 0.20 grams of the biocidal composition are present per gram of wiping article, on a dry weight basis, especially where the wiping article is a cellulose sponge. More preferably the biocidal composition, based on the weight percentage of the actives in the selected biocidal composition, is present in amounts of from 0.01 grams to 0.1 grams, still more preferably from 0.02 grams to 0.1 grams per gram of the wiping article, especially sponges, based on the dry weight of the wiping article. It is to be understood that higher dosing of the biocidal composition will also be expected to impart a longer duration of the anti-microbial properties a wiping article prepared according to the present inventive teaching. Illustrative examples of sponges according to the first and third aspects of the invention which include low aqueous soluble biocidal composition dosings are described in the Examples.

According to a the second and fourth aspects of the invention there is provided sponge, woven or non-woven wiping article, which contains therein a carrier having associated therewith, desirably dispersed therein, a biocidally effective amount of an biocidal composition. The low-aqueous soluble carrier is an organic material which desirably exhibits a relatively low rate of dissolution in water, generally such that when formed into a cube, exhibits less than about 5%wt. dissolution into 100g of water (approx 20°C) per 24 hours, and is compatible with the biocidal composition.

Exemplary organic materials which exhibit low rates of aqueous dissolution include natural waxes including vegetable waxes such as carnauba wax, cauassu wax, candelilla wax, ouricuri wax, raffia wax, palm wax, esparto wax, sugar cane wax, and cotton wax; animal waxes such as beeswax, ghedda wax, chinese insect wax, shellac wax, lanolin and walrat (spermaceti); mineral waxes such as paraffin wax, microcrystalline waxes, ozokerite-ceresin, petroleum waxes, montan wax. Examples of useful synthetic waxes are fatty alcohols such as lanette wax; fatty acid esters of polyhydric alcohols and especially stearates including but not limited to glyceryl distearate, glyceryl monostearate, ethylene glycol monostearate, diethylene glycol monostearate; chlorinated products such as chlorinated naphthalene waxes, chlorinated paraffin waxes; synthetic waxes containing nitrogen such as Acrawaxes (Glycol Products Co.), Armorwax (Armour Co.); pseudoester waxes such as alkylamide waxes, ester-pseudoester waxes, arylamide waxes; silicone waxes; and polyethylene waxes of both and low molecular weights, polypropylene glycol waxes and polyethylene glycol waxes such as Carbowaxes. Mixtures of two or more waxes may also be used.

Further exemplary organic materials which exhibit which exhibit low rates of aqueous dissolution and useful in the second and fourth aspects of the invention include materials which are presently commercially available in the form of surfactant compositions which include block copolymers of ethylene oxide and propylene oxide, ethoxylated alcohols, as well as alkanolamides. Mixtures of two or more of such surfactant compositions may also be used. Also, mixtures of one or more waxes may be used to form mixtures with one or more surfactant compositions described here to form the low-aqueous soluble carrier according to the invention. Especially preferred for use as the carrier materials having low rate of aqueous dissolution include surfactants those sold in the Plurafac® series of surfactants, particularly Plurafac® A-39 (BASF Inc., Mt. Olive Township, NJ) as well as those sold in the Pluronic® series of surfactants, especially Pluronic® F-127 (also available from BASF Inc.)

It is contemplated that one or more of the surfactant compositions may be used, and it is further contemplated that one or more waxes may be used with one or more surfactant compounds to form the carrier materials useful in the second and fourth aspects of the invention.

With regard to the biocidal composition useful in the second and fourth aspects of the invention, these may be virtually any which provide antimicrobial efficacy against gram positive, or gram negative, but desirably both gram positive and gram negative bacteria. It is only required that be not undesirably degraded when they are used in process according to the fourth inventive aspect, and it is also desired that these have at least some measure of affinity although not necessarily are required to be soluble within the carrier material within which they are dispersed, mixed, or interspersed. These include those which may be useful in the first and third aspects of the invention, they may also include ones with greater aqueous solubility than those useful in the first and third aspect of the invention, and as well may include biocides which are not specifically named herein. Many of these materials are known and include any of a number of biocides (including known preservative compositions) including, but not limited to: parabens, glutaraldehyde, formaldehyde, 2-bromo-2-nitropropoane-1,3-diol, 2-methyl-4-isothiazoline-3-one, and mixtures thereof. Further useful exemplary and commercially available biocidal compositions include: Suttocide® A (50%wt. actives in solution) (Sutton Laboratories, Chatam NJ) which is described to include an active constituent based on sodium hydroxymethylglycinate; Germaben® II (Sutton Laboratories) which is described to include an active constituent based on diazolidinyl urea, methylparaben, propylparaben and propylene glycol; Biochek® 350 (35%wt. actives) (Calgon Corp., Pittsburgh, PA) which is described to include an active constituent based on dodecylguanidine hydrochloride; Biochek® 410 (25%wt. actives) (Calgon Corp., Pittsburgh PA) described to be a preservative composition of low aqueous solubility, based on 1,2-dibromo-2,4-dicyanobutante and 1,2-benzisothiazolin-3-one; Biochek® 350 (Calgon Corp., Pittsburgh, PA); Dowicil 75 (Dow Chemical Co., Midland MI); Tektamer® 38 (98%wt. actives) and Tektamer® 38AD (25.5%wt. actives in an aqueous dispersion) (Calgon Corp.) described to include dibromo dicyanobutane as an active constituent; Proxel® GXL (19.3%wt. actives in a mixture of dipropylene glycol and water) (Zeneca Biocides, Wilmington DE) which is described to include an active constituent based on 1,2-benzisothiazolin-3-one; Nuocept® C and Nuocept® 95 (50%wt. actives) (Hüls) which is described to include an active constituent based on polymethoxy bicyclic oxazolidine; Dantogard Plus® (Lonza Inc., Fairlawn NJ) which is described to include an active constituent based on DMDM hydantoin and iodo propynyl butyl carbamate; Busan® 1104 (93%wt. actives) (Buckman Co.) which is described to include an active constituent based on dimethylhydroxymethylpyrazone; Busan® 1500 (93%wt. actives) (Buckman Co.) which is described to include an active constituent based on methene ammonium chloride; Dowicil® 200 (67.5%wt. actives) and Dowicil® 75 (94%wt. actives) which is described to include an active constituent based on 1-(3-chloroallyl)-3,5,7-triaza-1-azoniaadamantane chloride; Oxaban® A (78%wt. actives in an aqueous dispersion) (Angus Co.) which is described to include an active constituent based on dimethyl oxazolidine; Kathon® CG (1.5%wt. actives) and Kathon® CG/ICP (1.5%wt. actives) (both available from Rohm & Haas Co., Philadelphia PA) which are described to include an active constituent based on chloromethyl isothiazolinone and methyl isothiazolinone; AMA-410W® (10%wt. actives) (Vinings Co.) described to include an active constituent based methylene bis(thiocyanate); Elestab® HP100 (100%wt. actives) (Laboratoires SJrobiologiques) .) described to include an active constituent based on hexamidine diisethionate; Troysan® 142 (95%wt. actives) (Troy Chemical Co.) described to include an active constituent based on 3,5-dimethyltetrahydro 1,3,5-2H-thiadiazine-2-thione; as well as a composition marketed as Bactekiller® (Kanebo Co.) which described to include an active constituent based on silver, zinc and copper metals or metal salts.

Preferred for use as the biocidal composition according to the second and fourth inventive aspects are parabens, glutaraldehyde, formaldehyde, 2-bromo-2-nitropropoane-1,3-diol, 2-methyl-4-isothiazoline-3-one, sodium hydroxymethylglycinate, mixtures of diazolidinyl urea, methylparaben, propylparaben and propylene glycol, dodecylguanidine hydrochloride, 1,2-dibromo-2,4-dicyanobutante, 1,2-benzisothiazolin-3-one, dibromo dicyanobutane, 1,2-benzisothiazolin-3-one, polymethoxy bicyclic oxazolidine, DMDM hydantoin, iodo propynyl butyl carbamate, dimethylhydroxymethylpyrazone, methene ammonium chloride, 1-(3-chloroallyl)-3,5,7-triaza-1-azoniaadamantane chloride, dimethyl oxazolidine, chloromethyl isothiazolinone, methyl isothiazolinone, methylene bis(thiocyanate), hexamidine diisethionate, 3,5-dimethyltetrahydro 1,3,5-2H-thiadiazine-2-thione, and silver, zinc and copper metals or metal salts.

Particularly preferred for use as the biocide according to the second and fourth aspects of the invention is dimethylhydroxymethylpyrazole or 1,2-dibromo-2,4-dicyanobutane.

Others, although not particularly recited here may be used, and mixtures of two or more biocides may be used.

The biocial compositions useful according to the second or fourth inventive aspects may be used individually or in mixtures or two or more, and it is only required that be not undesirably degraded when they are used in process according to the fourth inventive aspect. Also, it is desired that these have at least some measure of affinity although not necessarily are required to be soluble within the carrier material within which they are dispersed, mixed, or interspersed. The biocidal composition also desirably features a low toxicity profile and thus its use in the household does not expect it to be particularly deleterious to the occupants. The biocidal composition also desirably exhibits good compatibility with a broad range of surfactant compositions especially anionic and nonionic surfactants which are optionally included in the articles according to the invention.

In the second and fourth inventive aspects, while the efficacy of the biocidal composition selected for use may vary, and that a higher or lower dosing of biocidal composition per unit of the wiping article may be required, generally good results have been achieved when at least about 0.005 grams of the biocidal composition based on the weight of the actives of the biocidal composition are present per gram of wiping article based on the dry weight of the wiping article, viz., in a substantially dehydrated state. Preferably from about 0.005 grams to about 1.0 grams of the biocidal composition are present per gram of wiping article, on a dry weight basis, especially where the wiping article is a cellulose sponge. More preferably the biocidal composition, based on the weight percentage of the actives in the selected biocidal composition, is present in amounts of from 0.01 grams to 0.1 grams, still more preferably from 0.02 grams to 0.1 grams per gram of the wiping article, especially sponges, based on the dry weight of the wiping article. It is to be understood that higher dosing of the biocidal composition will also be expected to impart a longer duration of the anti-microbial properties a wiping article prepared according to second and fourth aspects of the present invention. Illustrative examples of biocidal composition dosings are described in the Examples.

The wiping articles according to the second and fourth aspects of the invention, especially sponges, may be easily produced by a process herein the carrier material is liquefied, which may require heating, adding the biocidal composition, and thereafter stirring to ensure a good dispersion of the latter in the former. Further optional constituents including one or more surfactants may also be added. Thereafter, the mixture may be cooled, optionally moulded, into a solid shape or form which may be then associated with the wiping article, or in the alternative, while still in a liquid form the wiping article may be contacted with the mixture which is subsequently permitted to cool, in situ.

As opposed to many of the prior art wiping articles, and in particularly, sponges, the sponges, woven wiping articles and non-woven wiping articles according to any aspect of the invention feature a long-lasting antimicrobial benefit. A variety of known art sponges, wiping articles, and especially woven or non-woven wiping wipes may be provided with the benefit of a long-lasting antimicrobial benefit by following the present inventive teachings taught herein. In contrast to many of the teachings of the prior art, neither the selection of the biocide having relatively low aqueous solubility (first and third aspects of the invention), nor the use of a carrier with a biocide as described herein, is believed to be taught or anticipated in the prior art. The present known art preservative compositions, including antimicrobial quaternary ammonium compounds which are commonly used as preservative agents for sponges, especially cellulose sponges, have an appreciably higher water solubility and thus cannot provide the long-term antimicrobial benefit to the inventive wiping articles. Further, as may be seen from the above description of the invention, there are no particular process steps which need to be following during the manufacture or the formation of the wiping article, i.e., such as the formation of a cellulose sponge according to the viscose process, or in the formation of the woven or non-woven wipe which needs to be followed. All of these articles, however, may be successfully treated in accordance with any of the process taught herein and be provided with the long-term antimicrobial benefits discussed herein.

Wiping articles according to the invention, and especially those according to the preferred embodiments, i.e., hydrophilic sponges, may include one or more further constituents to enhance the overall performance of properties. One class of materials are compatible surfactants which do not deleteriously effect the overall antimicrobial benefit provided by the biocidal compositions introduced into the wiping article. These may include any of the known classes including anionic, nonionic, cationic, zwitterionic, but are desirably selected from among anionic surfactants or which are known for their good foaming and detergency properties, and from the nonionic surfactants which also provide a degree of foaming and detergency to the articles according to the invention.

Exemplary anionic surface active agents include compounds known to the art as useful as anionic surfactants. These include but are not limited to: alkali metal salts, ammonium salts, amine salts, aminoalcohol salts or the magnesium salts of one or more of the following compounds: alkyl sulphates, alkyl ether sulphates, alkylamidoether sulphates, alkylaryl polyether sulphates, monoglyceride sulphates, alkylsulphonates, alkylamide sulphonates, alkylarylsulphonates, olefinsulphonates, paraffin sulphonates, alkyl sulphosuccinates, alkyl ether sulphosuccinates, alkylamide sulphosuccinates, alkyl sulfosuccinamate, alkyl sulfoacetates, alkyl phosphates, alkyl ether phosphates, acyl sarconsinates, acyl isoethionates, and N-acyl taurates. Generally, the alkyl or acyl radical in these various compounds comprise a carbon chain containing 12 to 20 carbon atoms.

Further exemplary anionic surface active agents which may be used include fatty acid salts, including salts of oleic, ricinoleic, palmitic, and stearic acids; copra oils or hydrogenated copra oil acid, and acyl lactylates whose acyl radical contains 8 to 20 carbon atoms.

Other anionic surface active agents not particularly enumerated here may also find use in conjunction with the compounds of the present invention. The anionic surface active agents, when present, may be present in any effective amount, generally are present in an amount of from 0.01 to 20%wt., more preferably from 0.01 - 5%wt. based on the weight of the sponge, woven or non-woven wipe based on a dry weight basis.

With regard to nonionic surfactants, these include known art nonionic surfactant compounds. Practically any hydrophobic compound having a carboxy hydroxy, amido, or amino group with a free hydrogen attached to the nitrogen can be condensed with ethylene oxide or with the polyhydration product thereof, polyethylene glycol, to form a water soluble nonionic surfactant compound. Further, the length of the polyethenoxy hydrophobic and hydrophilic elements may various. Exemplary nonionic compounds include the polyoxyethylene ethers of alkyl aromatic hydroxy compounds, e.g., alkylated polyoxyethylene phenols, polyoxyethylene ethers of long chain aliphatic alcohols, the polyoxyethylene ethers of hydrophobic propylene oxide polymers, and the higher alkyl amine oxides.

To be mentioned as particularly useful nonionic surfactants are alkoxylated linear primary and secondary alcohols such as those commercially available under the tradenames PolyTergent® SL series (Olin Chemical Co., Stamford CT), Neodol® series (Shell Chemical Co., Houston TX); as alkoxylated alkyl phenols including those commercially available under the tradename Triton® X series (Union Carbide Chem. Co., Danbury CT).

Where such surfactants are included in the wiping articles of the invention, they may be supplied to the wiping article by any effective means including but not limiting to spraying, dipping, soaking a quantity of one or more surfactants dispersed or dissolved in a suitable carrier liquid which my be made us of water, organic solvents or mixtures thereof or which water is most likely to be used.. Where one or more surfactants are intended to be used, and the carrier liquid is water, it is desired then that the one or more surfactants be supplied to the wiping articles prior to the process for introduction of the low aqueous soluble biocidal composition to the wiping articles as taught herein.

The nonionic surface active agents, when present, may be present in any effective amount, generally are present in an amount of from 0.01 to 20%wt., more preferably from 0.01 - 5%wt. based on the weight of the sponge, woven or non-woven wipe based on a dry weight basis.

Certain preferred embodiments according to various aspects of the invention, as well as a demonstration of the long-term antimicrobial benefits of the wiping articles according to the invention described in more fully in examples below.

### EXAMPLES

The residual long-term antimicrobial benefits of the wiping articles according to the invention are demonstrated in the following.

### Production of sponges, and evaluation of sponges according to the first and third aspects of the invention:

A side-by-side evaluation of a first set of "control" sponges with a second set of sponges prepared and treated in accordance with the present invention was performed.

The sponges in each of the first and second sets were made of cellulose and were approximately 4 9/16th of an inch by 3 1/16th of inch by 7/8th of an inch in dimension. These sponges were used as supplied, and had a dry weight (substantially dehydrated weight) of 12.5 grams. It was believed that a minor amount of an aqueous soluble biocidal composition was included in the control sponge (i.e., less than 0.08 grams for the total sponge) as it was supplied by the manufacturer. The presence of this biocidal composition, in small amounts, is intended to resist the growth of yeasts, mould, bacteria and viruses during the shelf-life of the article. The first set of control sponges were used "as is" supplied from the manufacturer.

The second set of sponges were prepared in accordance with the inventive teaching of the first and third inventive aspects, as follows. To a glass beaker was supplied 19 grams of an organic solvent (denatured anhydrous ethanol) to which was added 1.0 gram of a low-aqueous soluble biocidal composition commercially available as Tektamer® 38 (Calgon Corporation, Pittsburgh, PA); it is believed that the active constituents in this biocidal composition were 1,2-dibromo-2,4-dicyanobutane as described above. This low-aqueous soluble biocidal composition exhibited an aqueous solubility of less than 1% by weight in water, and further provided the benefits of good compatibility with anionic and nonionic surfactants which may be optionally included in the wiping articles according to the invention. Further, this low-aqueous soluble biocidal composition was recited as being effective against both gram positive and gram negative bacteria, as well as mould and yeasts, and thus considered a "broad spectrum" antimicrobial agent. Additionally, this low-aqueous soluble biocidal composition had a low toxicity profile and thus its use in the household does not expect it to be particularly deleterious to the occupants.

Next, each of the sponges were totally immersed in the organic solvent containing the low-aqueous soluble biocidal composition, and it was retained for sufficient time so that the sponge totally absorbed as much of the said organic solvent and biocidal composition as was feasible. Thereafter, it was withdrawn, laid on a flat non-porous surface, and the organic solvent was permitted to evaporate into the ambient environment. The amount of low-aqueous soluble biocidal delivered to each sponge was 1.0 grams per sponge, which corresponded to a dosing of 0.08 grams of the low-aqueous soluble biocidal composition per gram of the sponge on a dry weight basis. This drying took approximately 24 hours. Thereafter, the sponge was slightly resilient to the touch.

This protocol was repeated for each of the sponges in the second set, and in a sufficient number to perform the test to determine residual antimicrobal benefit of the sponges described below.

### Production of sponges, and evaluation of sponges according to the second and fourth aspects of the invention:

The residual long-term antimicrobial benefits of the wiping articles according to the second and fourth aspects of the invention are demonstrated in the following. Side-by-side evaluations of a first set of"control" sponges with a second and a third set of sponges prepared and treated in accordance with the present invention was performed.

The sponges in each of the sets used in the forming the sponges of Examples, A, B and C were of a tri-layer structure having a base layer of cellulose, an intermediate layer of a foamed rubber, and a top layer of a woven fabric as described in US 4704757; the sponges were approximately 4 9/16th of an inch by 3 1/16th of inch by 7/8th of an inch in dimension.

### EXAMPLE A

The first set of control sponges were used "as is" supplied from the manufacturer and had a dry weight (substantially dehydrated weight) of 8 grams. A 2.9 gram mixture consisting of 68.5%wt. Plurafac® A39 which at room temperature (68°F, 20°C) is a waxy composition, and 31.5%wt. Neodol® 25-3 , a C12-C15 ethoxylated linear alcohol with an average of 3 ethoxy groups per molecule was produced by gently heating these consistuents in a laboratory beaker to form a flowable melted mixture. While the mixture was still fluid, a large bore syringe was used to inject the 2.9 grams into the centre part of the sponge in three places, each injection providing an approximately equivalent amount. This mixture was then allowed to cool and harden.

### EXAMPLE B

The second set of sponges according to the invention were identical with those described immediately above (Example A) and was similarly prepared but into each of the sponges was provided a mixture of about 4 grams consisting of 25%wt. of Tektamer® 38 (a preservative composition containing 1,2-dibromo-2,4-dicyanobutane), 65%wt. of Plurafac® A39 and 10% Neodol® 25-3. This mixture was similarly prepared by gently heating the constituents, and while the mixture was still fluid, a large bore syringe was used to inject the 4 grams into three places in the centre part of the sponge, after which the mixture within the sponge was allowed to cool and harden.

### EXAMPLE C

The third set of sponges was prepared in the same manner as the second set (Example B) described above, into which was similarly injected 4 grams of a mixture which consisted of 27%wt. of Busan® 1104 (a preservative composition containing dimethylhydroxylmethylpyrazole), 50%wt. of Plurafac® A39 and 23%wt. Neodol® 25-3. As before, the mixture was prepared by gently the constituents to form a melted mixture, which was thereafter injected into three places in the centre part of the sponge, after which the mixture within the sponge was allowed to cool and harden.

### Evaluation of residual antimicrobial benefit:

The evaluation of the residual antimicrobial benefit of the sponges was performed using an inoculum which contained both *Escherichia coli* (gram negative type pathogenic bacteria) (ATCC 8739) and *Salmonella choleraesuis* (gram negative type pathogenic bacteria) (ATCC 10708). The inoculum was prepared from a lyophilised culture of each of the indicated bacteria which was rehydrated and stored on CTA medium. Each bacteria was thereafter cultured in Trypic Soy Broth for each inoculation. During the test protocol, for each inoculation as described below, a fresh preparation of the inoculum described above was used.

The test was performed over a 15 day interval, wherein on sequential days (except for intervening weekend days of Saturday, and Sunday) each sponge in each of the sets of sponges was individually contacted with 1.0 ml of the inoculum containing the *E. coli* and *S. choleraesuis* bacteria at a concentration of log 106 of each bacteria, which had been provided to a sterile hard surface. The sponges absorbed the 1.0 ml of the inoculum. Thereafter, to each of the sponges were further introduced approx. 75 ml. of Trypic Soy Broth in order to facilitate the distribution of the inoculum within the sponge, and an additional approx. 50 ml. amount of sterile deionised water was also added to further moisten the sponge and aid in distributing the inoculum within. Thereafter, each sponge was then manually wrung to remove any excess liquid, and then laid on a non-porous hard surface which was opened to the ambient environment. This protocol was performed on each of the sequential days once in the "am" (between 8-11 AM) and once in the "pm" (between 1-5 PM).

On the days indicated (see Tables 1, and 2), one of the sponges was removed from each of the sets of sponges, and tested in order to determine the presence of the *E. coli* and *S. choleraesuis* bacteria.

In each test, the respective sponges were cut in half, and shortly thereafter (approx. 15 minutes to 60 minutes) one half of each sponge was therafter put through a Stomacher apparatus (Model 400 commercially available from the Tekmar Co.) to which was supplied 200 ml of Letheen broth. The stomacher was operated for a period of approximately 5 minutes, after which an aliquot of the Letheen broth was removed, serially diluted according to conventional techniques, and plated with a sterile agar medium. The aliquot of the Letheen broth was presumed to contain any *E. coli* and *S. choleraesuis* bacteria which may have been present in the sponge.

The other half of the sponge was tested in a similar manner, but were first permitted to remain on a hard surface in the laboratory and was tested on the next successive day when tests were performed, and are indicated as "am" sponges on the Tables 1 and 2. This permitted for the remaining half sponge to remain in the ambient and to permit any present *E. coli* and *S. choleraesuis* bacteria to grow within the sponge. Thus, it should be understood that the test results associated with a half sponge listed as an "am" half sponge is the remaining half of the half sponge tested in the "pm" of the day prior, or in the case of intervening weekend days, was from the Friday prior.

The aliquot thus removed was used, in accordance with conventional techniques, to produce dilutions at each of 1 x 10-2 through 1 x 10-7 which were then plated with sterile MacConkey Agar. These plates were permitted to incubate for 36 - 48 hours at 35°C - 37°C so to permit the growth of colonies of any *Escherichia coli* and/or *Salmonella choleraesuis* bacteria which may have been present.

The protocol described above was repeated for various days of the test. It is further to be appreciated that the sponges in the latter part of the test had been contacted for each of the days indicated above, and thus these sponges had undergone repeated cycles of contact, wringing out, lay in the ambient, until their day arrived and they were tested by being cut apart and extracted in the Letheen broth from which the number of colonies of any *Escherichia coli* and/or *Salmonella choleraesuis* bacteria which may have been present were ultimately evaluated.

The results of these evaluations with respect to these sponges according to the first aspect of the invention, and produced by a process according to the third aspect of the invention are indicated on Table 1, and on Table 2, below.

**TABLE 1**

| Sponges treated with Quaternary Ammonium Chloride (Control) | | | | | | | | |
|---|---|---|---|---|---|---|---|---|
| Day | 10⁻² | 10⁻³ | 10⁻⁴ | 10⁻⁵ | 10⁻⁶ | 10⁻⁷ | Organisms/ ½ Sponge | Organisms Sponge |
| 1 pm | TNTC | 12 | 3 | 0 | 0 | 0 | 1.2 x 10⁴ | 2.4 x 10⁴ |
| 2am | 6 | 2 | 0 | 0 | 0 | 0 | 6.0 x 10² | 1.2 x 10³ |
| 3 pm | TNTC | TNTC | 45 | 6 | 0 | 0 | 4.5 x 10⁵ | 9.0 x 10⁵ |
| 4 am | TNTC | TNTC | 13 | 0 | 0 | 0 | 1.3 x 10⁵ | 2.6 x 10⁵ |
| 5 pm | TNTC | TNTC | TNTC | TNTC | 25 | 1 | 2.5 x 10⁷ | 5.0 x 10⁷ |
| 8am | TNTC | TNTC | TNTC | TNTC | TNTC | TNTC | >3.0 x 10⁹ | >6.0 x 10⁹ |
| 8 pm | TNTC | TNTC | TNTC | TNTC | TNTC | TNTC | >3.0 x 10⁹ | >6.0 x 10⁹ |
| 9 am | TNTC | TNTC | TNTC | TNTC | TNTC | TNTC | >3.0 x 10⁹ | >6.0 x 10⁹ |
| 10 pm | TNTC | TNTC | TNTC | TNTC | TNTC | TNTC | >3.0 x 10⁹ | >6.0 x 10⁹ |
| 11 am | TNTC | TNTC | TNTC | TNTC | TNTC | TNTC | >3.0 x 10⁹ | >6.0 x 10⁹ |
| 12 pm | TNTC | TNTC | TNTC | TNTC | TNTC | TNTC | >3.0 x 10⁹ | >6.0 x 10⁹ |
| 15 am | TNTC | TNTC | TNTC | TNTC | TNTC | TNTC | >3.0 x 10⁹ | >6.0 x 10⁹ |
| TNTC = to numerous to count | | | | | | | | |

**TABLE 2**

| Sponge treated with 1,2-dibromo-2,4-dicyanobutane (Invention) | | | | | | | | |
|---|---|---|---|---|---|---|---|---|
| Day | 10⁻² | 10⁻³ | 10⁻⁴ | 10⁻⁵ | 10⁻⁶ | 10⁻⁷ | Organisms/ ½ Sponge | Organisms Sponge |
| 1 pm | 0 | 0 | 0 | 0 | 0 | 0 | <100 | <100 |
| 2 am | 0 | 0 | 0 | 0 | 0 | 0 | <100 | <100 |
| 3 pm | 0 | 0 | 0 | 0 | 0 | 0 | <100 | <100 |
| 4 am | 0 | 0 | 0 | 0 | 0 | 0 | <100 | <100 |
| 5 pm | 0 | 0 | 0 | 0 | 0 | 0 | <100 | <100 |
| 8 am | 0 | 0 | 0 | 0 | 0 | 0 | <100 | <100 |
| 9 am | 3 | 1 | 1 | 0 | 0 | 0 | <100 | <100 |
| 10 pm | 54 | TNTC | 157 | 24 | 0 | 0 | 1.5 x 10⁶ | 3.0 x 10⁶ |
| 11 am | TNTC | 39 | 4 | 0 | 0 | 0 | 3.9 x 10⁴ | 7.8 x 10⁴ |
| 12 pm | 103 | 132 | 32 | 6 | 0 | 0 | 3.2 x 10⁵ | 6.4 x 10⁵ |
| 15 am | 0 | 0 | 0 | 0 | 0 | 0 | <100 | <100 |
| TNTC = to numerous to count | | | | | | | | |

As seen from the results indicated on Table 1 (control) and Table 2 (invention) the striking differences between the long-term antimicrobial efficacy of the sponges are demonstrated. As may be denoted from the results on Table 1, while the control sponge exhibited antimicrobial efficacy on the first and second day of the test, thereafter, it can be seen that the antimicrobial efficacy of the sponge substantially degraded thereafter and thus provided effectively no antimiocrobial benefit. Such demonstrates that the use of such commonly encountered preservative constituents, and the dosage ranges commonly encountered of the use of these materials provides a little lasting antimicrobial benefit to the sponge under conditions typically encountered.

In contrast, as a review of the results on Table 2 demonstrate, it may be seen that the sponge treated with the low-aqueous soluble preservative composition, as described above provided a striking and substantial level of efficacy against the *Escherichia coli* and/or *Salmonella choleraesuis* bacteria throughout 15 days of the test, and under the test conditions as described above.

The results of the evaluations with respect to the sponges according to the second aspect of the invention, and produced by a process according to the fourth aspects of the invention are indicated on Tables 3, 4 and 5, below.

**TABLE 3**

| (Control) | | | | | | | | |
|---|---|---|---|---|---|---|---|---|
| Day | 10⁻² | 10⁻³ | 10⁻⁴ | 10⁻⁵ | 10⁻⁶ | 10⁻⁷ | Organisms/ ½ Sponge | Organisms/ Sponge |
| 1 pm | TNTC | 30 | 3 | 0 | 0 | 0 | 3.0 x 10⁴ | 6.0 x 10⁴ |
| 2am | TNTC | 56 | 6 | 0 | 0 | 0 | 5.6 x 10⁴ | 1.1 x 10⁵ |
| 3 pm | TNTC | TNTC | TNTC | 32 | 2 | 0 | 3.2 x 10⁶ | 6.4 x 10⁶ |
| 4 am | TNTC | TNTC | TNTC | TNTC | TNTC | 13 | 1.3 x 10⁸ | 2.0 x 10⁸ |
| 5 pm | TNTC | TNTC | TNTC | TNTC | TNTC | TNTC | > 3.0 x 10⁹ | > 6.0 X 10⁹ |
| Testing terminated due to heavy contamination of the sponges | | | | | | | | |
| "TNTC" = too numerous to count | | | | | | | | |

**TABLE 4**

| (Invention - containing 1,2-dibromo-2,4-dicyanobutane) | | | | | | | | |
|---|---|---|---|---|---|---|---|---|
| Day | 10⁻² | 10⁻³ | 10⁻⁴ | 10⁻⁵ | 10⁻⁶ | 10⁻⁷ | Organisms/ ½ Sponge | Organisms/ Sponge |
| 1 pm | 0 | 0 | 0 | 0 | 0 | 0 | <100 | <100 |
| 2 am | 0 | 0 | 0 | 0 | 0 | 0 | <100 | <100 |
| 3 pm | 0 | TNTC | 0 | 0 | 0 | 0 | 4.6 x 10⁴ | 9.2 x 10⁴ |
| 4 am | 0 | 0 | 0 | 0 | 0 | 0 | <100 | <100 |
| 5 pm | 0 | TNTC | 30 | 1 | 0 | 0 | 3.0 x 10⁵ | 6.0 x 10⁵ |
| 9 am | 0 | 0 | 0 | 0 | 0 | 0 | <100 | <100 |
| 9 pm | 0 | 46 | 24 | 4 | 0 | 0 | 4.6 x 10⁴ | 9.2 x 10⁴ |
| 11 am | 0 | 0 | 0 | 0 | 0 | 0 | <100 | <100 |
| 12 pm | 0 | 0 | 12 | 1 | 0 | 0 | 1.2 x 10⁴ | 2.4 x 10⁴ |
| 15 am | 0 | 0 | 0 | 0 | 0 | 0 | <100 | <100 |
| "TNTC" = too numerous to count | | | | | | | | |

**TABLE 5**

| (Invention - containing dimethylhydroxymethylpyrazole) | | | | | | | | |
|---|---|---|---|---|---|---|---|---|
| Day | 10⁻² | 10⁻³ | 10⁻⁴ | 10⁻⁵ | 10⁻⁶ | 10⁻⁷ | Organisms/ ½ Sponge | Organisms/ Sponge |
| 1 pm | 102 | 65 | 8 | 0 | 0 | 0 | 6.5 x 10⁴ | 1.3 x 10⁵ |
| 2am | 0 | 0 | 0 | 0 | 0 | 0 | <100 | <100 |
| 3 pm | TNTC | TNTC | 28 | 10 | 0 | 0 | 2.8 x x 10⁵ | 5.6 x 10⁵ |
| 4am | 2 | 0 | 0 | 0 | 0 | 0 | 2.0 x 10² | 4.0 x 10² |
| 5pm | TNTC | 195 | 95 | 0 | 0 | 0 | 2.0 x 10⁵ | 4.0 x 10⁵ |
| 9 am | 0 | 0 | 0 | 0 | 0 | 0 | <100 | <100 |
| 9 pm | TNTC | TNTC | 66 | 10 | 1 | 0 | 6.6 x 10⁵ | 1.3 x 10⁶ |
| 11 am | 0 | 0 | 0 | 0 | 0 | 0 | <100 | <100 |
| 12 pm | TNTC | 53 | 18 | 0 | 0 | 0 | 5.3 x 10⁴ | 1.0 x 10⁵ |
| 15 am | 0 | 0 | 0 | 0 | 0 | 0 | <100 | <100 |
| "TNTC" = too numerous to count | | | | | | | | |

As seen from the results indicated on Table 3 (control) and Tables 4 and 5 (second and fourth aspects of the invention) the striking differences between the long-term antimicrobial efficacy of the sponges are demonstrated. As may be denoted from the results on Table 3, while the control sponge exhibited limited antimicrobial efficacy on the first and second day of the test, thereafter, it can be seen that the antimicrobial efficacy of the sponge substantially degraded thereafter and thus provided effectively no antimicrobial benefit. Such demonstrates that the use of such commonly encountered preservative constituents, and the dosage ranges commonly encountered of the use of these materials provides a little lasting antimicrobial benefit to the sponge under conditions typically encountered.

In contrast, as a review of the results on Tables 4 and 5 demonstrate, it may be seen that the sponges treated with these different compositions, as described above provided a striking and substantial level of efficacy against the *Escherichia coli* and/or *Salmonella choleraesuis* bacteria throughout 15 days of the test, and under the test conditions as described above. Particularly important it the fact that sponges according to the invention exhibited good long term antimicrobial efficacy subsequent to repeated do sings and rinsings.

Unlike many of the test protocols which were cited in one or more of the prior art patents, it is believed that the test protocol described herein provides a very useful and realistic test which demonstrates the unexpected and superior properties of the sponges according to the present invention. It is believed by the inventors that the performance of the test upon successive days during a two-week interval and submitting for repeated dosings with the gram negative bacteria noted above, and the demonstration of the strikingly effective long-term antimicrobial characteristics of the sponges are not believed to have been known or readily producible from the prior art.

## Claims

1. A sponge or a non-woven wiping article or a woven wiping article wherein the article is characterised by incorporating a biocidal composition which provides a residual antimicrobial effect.

2. A sponge or a non-woven wiping article or woven wiping article according to Claim 1 wherein the article is impregnated with a biocidally effective amount of a biocidal composition having an aqueous solubility of not more than 7.5%wt. in water at 25°C.

3. A sponge or a non-woven wiping article or woven wiping article according to claim 2 which comprises an aqueous biocidal composition having an aqueous solubility of not more than 2%wt.

4. A sponge or a non-woven wiping article or woven wiping article according to any one of Claims 1 to 3 in which the biocidal composition is present in an amount of from 0.005g to 1.0g per gram of the sponge or non-woven wiping article or woven wiping article on a dry weight basis.

5. A sponge or a non-woven wiping article or woven wiping article according to Claim 4 in which the sponge or wiping article is impregnated with from about 0.005 grams to about 1 gram of a biocidally effective amount of a biocidal composition per gram of the sponge or non-woven or woven wiping article based on the dry weight of the sponge or non-woven or woven wiping article, wherein said biocidal composition has an aqueous solubility of not more than 7.5%wt. in water at 25°C.

6. A sponge, or a non-woven wiping article or woven wiping article according to Claim 1 in which the sponge or wiping article includes a carrier of low aqueous solubility in which the biocidal composition is dispersed.

7. A sponge or a non-woven wiping article or woven wiping article according to Claim 6 wherein the carrier is selected from one or more of the following: synthetic waxes, microcrystalline waxes, ozokerite-ceresin, petroleum waxes, montan wax, mineral waxes, animal waxes, natural waxes, vegetable waxes as well as one or more surfactant compositions based on block copolymers of ethylene oxide and propylene oxide, ethoxylated alcohols, or alkanolamides.

8. A process for providing residual antimicrobial benefit to a flexible hydrophilic article, especially a sponge, which comprises the process steps of:
i) providing a dispersion of a biocidal composition in carrier having low aqueous solubility;
ii) impregnating the said flexible hydrophilic article with the carrier containing the biocidal composition to provide a biocidally effective dosage of the biocidal composition to the said article.

9. A sponge or a non-woven wiping article or a woven wiping article according to any preceding claim which further includes one or more surface active agents selected from anionic, nonionic, cationic and zwitterionic active agents.

10. A sponge or a non-woven wiping article or a woven wiping article according to any preceding claim which is effective against gram positive bacteria or gram negative bacteria.

11. A process for providing residual antimicrobial benefit to a sponge or a non-woven wiping article or a woven wiping article which comprises the process steps of:
i) providing an aqueous biocidal composition which has a low solubility
in water in an appropriate fluid carrier in which the biocidal composition is miscible, but is preferably soluble;
ii) impregnating the said wiping article to provide an effective dosage of the biocidal composition to the same; and
iii) subsequently removing at least a portion, preferably substantially all of the carrier composition.

12. A process for providing residual antimicrobial benefit to a sponge or a woven wiping article or non-woven wiping article which comprises the process steps of:
i) providing a dispersion of a biocidal composition in carrier having low aqueous solubility;
ii) impregnating the said flexible hydrophilic article with the carrier containing the biocidal composition to provide a biocidally effective dosage of the biocidal composition to the said article.
